# EUROPEAN PATENT SPECIFICATION

(11) **EP 3 381 633 B1**
(45) Date of publication and mention of the grant of the patent: **11.11.2020**
(21) Application number: 18000093.7
(22) Date of filing: 05.02.2018
(51) Int. Cl.: B27K 5/02, C09D 5/22, C09D 15/00

(54) **AUTOMATED AND SEMI-AUTOMATED PROCESS FOR STAINING WOOD WITH FLUORESCENT DYES AND PIGMENTS**
AUTOMATISIERTES UND HALBAUTOMATISIERTES VERFAHREN ZUM BEIZEN VON HOLZ MIT FLUORESZENTEN FARBSTOFFEN UND PIGMENTEN
PROCESSUS AUTOMATISÉ ET SEMI-AUTOMATISÉ POUR LA COLORATION DU BOIS AVEC DES COLORANTS FLUORESCENTS ET DES PIGMENTS

(30) Priority: 24.02.2017 US 201715442178
(43) Date of publication of application: 03.10.2018
(73) Proprietor: Mongalo Robleto, Carlos Jose, Miami, Florida 33411 (US); Mongalo, Carlos Jose, Miami, FL 33411 (US)
(72) Inventor: Mongalo Robleto, Carlos Jose, Miami, Florida 33411 (US); Mongalo, Carlos Jose, Miami, FL 33411 (US)
(74) Representative: Lapienis, Juozas

(56) References cited:
- FR-A- 1 156 596
- JP-A- S55 101 404

## Description

### CROSS REFERENCE TO RELATED APPLICATION

This application is a continuation-in-part, and claims priority, to co-pending patent application Ser. No. 13/694,625, filed on December 12, 2012, now US Patent 9,579,817

### BACKGROUND OF THE INVENTION

### 1.Field of the Invention -

This invention relates to a process for preparing pre-finished wood articles of manufacture and to pre-finished articles of manufacture. More specifically, this invention is directed to a process for staining wood, preferably unfinished wood, and/or wood articles from which the finish has been removed, with a stain (oil or water based), to produced a multi-colored, pre-finished wood article of manufacture, wherein the wood grain features of the pre-finished wood article have been highlighted in at least two distinct colors, and/or shades thereof, and are visible in both visible light and in the absence of visible light. The staining process of this invention can be performed by traditional manual batch processing, and/or by automated, preprogramed wood finishing processing equipment and/or by any combination thereof, wherein one or more steps can be performed manually and one or more steps can be performed with preprogramed wood finishing processing equipment.

### 2. Description of the Prior Art -

Natural wood can have various shades of a given color, and the intensity thereof varies from the heartwood to the sapwood of any species of timber from which the lumber is cut. Moreover, the grain of a given wood species can appear to have different patterns, depending upon the angle of cut of a section through a piece of timber from which the lumber is cut. Moreover, the appearance of wood for the same species of wood can appear different, depending upon the age of tree within a given species. In fact, as wood ages, compounds within wood can oxidize over time producing unexpected reaction (oxidation) products, thereby imparting fluorescent properties to the wood. An early observation of fluorescence in wood was described in 1560 by Bernardino de Sahagún, and in 1565 by Nicolás Monardes in the infusion known as *lignum nephriticum* (Latin for "kidney wood"). It was derived from the wood of two tree species, *Pterocarpus indicus* and *Eysenhardtia polystachya.* The chemical compound responsible for this fluorescence is matlaline, which is the oxidation product of one of the flavonoids found in this wood, Acuña, A. U.; Amat-Guerri, F.; Morcillo, P. N.; Liras, M.; RodriGuez, B. N. (2009). "Structure and Formation of the Fluorescent Compound of Lignum nephriticum". Organic Letters 11 (14): 3020-3023.

The artificial coloring of wood, more specifically, by wood staining, has traditionally involved the preparation of the wood surface, by sanding, the removal of excess colorants from the wood by bleaching, followed thereafter by the application of a water or oil based stain or varnish. This process can typically involve light sanding, and the repeated application of the stain or varnish until the desired color is attained. Often the surface is lightly sanded between applications of successive exposure to a stain; and, in certain instances, can be sanded incident (during) the staining process. After the wood article has received the desired degree of stain, it can be sealed. The sealing process is generally preceded by a light sanding, prior to the application of the sealant. The sealing of the wood surface, (generally with a durable coating such as clear polyurethane based finish), preserves the wood surface from physical damage and reduces oxidation of wood upon exposure to light (marine stains). In the absence of sealing, oxidation products can be formed within the wood, and, such oxidation products darken the wood and/or diminish the contrast between stain in the heartwood and stain in the sapwood.

The following patents are representative of the treatment of wood to accomplish a decorative finish, and/or impart a design, through the use of a stencil (US 8,048,517 to Kimball et al., issued November 1, 2011, application of pre-formed designs or strips (US 8,056,295 to Campelle et al., issued November 15, 2011, and various photo assisted creation/transfers of an image pattern to a wood surface (to *Lenox et al.* issued December 3, 1). Prior art document JPS55101404 A, discloses a method for colouring wood comprising pretreating wood with bleach prior to staining. Prior art document FR1156596 discloses a method for staining wood using fluorescent pigments.

Notwithstanding these prior efforts to provide a finish/pattern to a wood surface, all rely upon traditional processes for applying monochromatic stain for treatment, or alternatively, apply a transfer to such surface, or alternatively, affix a coating to such surface. Moreover, generally all wood stains contain only single colorant, thus, limiting their use and the appearance of the stained product.

Accordingly, there continues to exist a need to enhance the natural appearance of the grain of a wood product, without departure from the traditional staining techniques.

### OBJECTIVES OF THIS INVENTION

It is the object of this invention to remedy the above as well as related deficiencies in the prior art.

More specifically, it is the principle object of this invention to provide a process for the enhancement of the grain pattern of wood products with at least one fluorescent stain, which preferably results in the visualization of the grain pattern in both daylight and in darkness.

It is another object of this invention to provide a process for the enhancement of the grain pattern of wood products with at least one fluorescent stain, by inclusion of more than one fluorescent dye or pigment within a commercially available fluorescent paint and/or stain.

It is yet another object of this invention to provide a process for the enhancement of the grain pattern of wood products with a fluorescent stain, by inclusion of more than one fluorescent dye or pigment within a given paint and/or stain to produce a fluorescent stained wood product having a distinctive features of grain for each of the sapwood and hard wood in both natural light (visible electromagnetic spectrum) and in the absence of visible light.

It is still yet another object of this invention to impart an additional grain or decorative surface features to a natural, or to a stained wood product, by embossing the wood product by mechanical dies or with a laser, and thereafter staining the embossed wood product so as to impart additional feature/highlight the embossed features in the wood product.

Additional objects of this invention include the performance of one or more the steps of this process manually and/or with automated pre-programed equipment, and any combination of manual and automated processing equipment.

Additional objects of this invention include natural wood products prepared by the process of this invention, which have enhancement in the visualization of grain pattern in both daylight and in darkness.

### SUMMARY OF THE INVENTION

The above and related objects are achieved by providing a process for staining wood, preferably unfinished wood, and/or wood articles from which the finish has been removed, with a stain (oil or water based), according to the appended claims. The staining process can be used to enhance the natural grain of the wood, and/or by mechanically altering, or imparting, features to the grain of the wood, prior to staining, which add to, or complement, the natural grain of the wood.

In practice, an unfinished wood plank is pre-treated for staining, by first removing or minimizing surface imperfections and/or irregularities on the wood surface. The wood plank is then subjected to to a fluid solution to open the wood grain, to increase the absorption of stain. The fluid, (e.g. aqueous liquid), causes the surface of the wood plank to swell, thereby opening the wood grain to enhance absorption of the stain. The aqueous liquid includes a mild bleach to substantially reduce the contrast between the heartwood and sapwood components thereof to the desired degree. Where the wood plank is relative featureless, and augmentation of the wood grain pattern is desired, or additional artificial features are desired to be imparted into the wood for staining, (e.g. addition of a logo or lettering), the wood plank is passed through an embossing machine. The embossing machine can include laser etching, or a combination of dies, to physically impart the requisite pattern/features to the wood plank. Such embossed pattern can be subsequently enhanced by the staining process. The embossing contemplated herein is inclusive of "distressing an object before staining or refinishing. In distressing, the object's surface of finish is intentionally destroyed or manipulated to look less than perfect, such as with sandpaper or paint stripper. Distressing has become a popular design style and decorative art form, and thereby create a rustic, attractive, one-of-a-kind appearance or vintage look. The final appearance of the distressed wood article is referred to in this invention as "patina".

Once the wood plank has been prepared for staining, as described above, it can be light sanded (if desired) to reduced surface roughness, and then contacted with a stain formulation containing more than one fluorescent dye or pigment. Each fluorescent dye or pigment in the formulation is thereby absorbed into the wood plank, so as to produce a uniquely colored stained wood product. The application of the stain formulation to the wood plank can be accomplished by any one or combination of techniques, e.g. manually with a rag, brush; or by machine application using a roller or spray gun; or by immersion of the wood plank into a staining bath.

The staining process is preferably performed incrementally, to attain a stained wood object having a wood grain, monochromatic appearance in visible light, and a different wood grain, fluorescent monochromatic appearance in the absence of visible light. In each instance, the color of the stain shall appear in varying intensity depending upon the uptake the stain in the heartwood or the sapwood.

### DESCRIPTION OF THE INVENTION INCLUDING PREFERRED EMBODIMENTS

This invention includes both manual and automated staining of architectural and finished wood products with a formulation containing of dyes and pigments, wherein at least one of the dyes and/or pigments absorbs electromagnetic radiation and glows (fluoresces) in the dark. The manual staining can comprise the pre-treatment and application of the staining formulation in a typical batch process, wherein a wood plank is immersed in a pre-treatment solution and thereafter stain. The finishing of the stained article, thereafter, comprises sealing of the stained article with a clear urethane varnish.

**STAIN FORMULATION** - It is understood for the purposes of the manual and automated processes of this invention, a "stain" is composed of the same three primary ingredients as paint (pigment, solvent, and binder), but is predominantly pigment (or dye) and solvent, with little binder. Much like the dyeing or staining of fabric, a wood stain is designed to color to the sapwood and hardwood features of the grain of the wood, to varying degrees, thereby dramatize their physical differences - a while leaving the substrate (background) mostly visible. Transparent varnishes or surface films are applied afterwards. In principle, a "stain" does not provide a surface coating or film. However, because the binders are from the same class of film-forming binders that are used in paints and varnishes, some build-up of film may occur, which can be minimized, if not prevented, by thinning of the stain with a suitable solvent.

The type of stain will either accentuate or obscure the wood grain, and neither is superior to the other. Most commercial stains contain both dye and pigment, and the degree to which they stain the wood is generally dependent on the length of time they are left on the wood. Pigments, regardless of the suspension agent, will not give as much color to very dense woods, but will deeply color woods with large pores (*e.g.* pine). Dyes are translucent and pigments are opaque.

**PRETREATMENT** - Pretreating of the wood object, prior to staining, is often desirable to enhance absorption of the stain and/or to accentuate one or more natural features of the wood. The pretreatment options can include swelling of the wood grain with a fluid and/or the mechanical abrasion of the wood surface with a wire brush. The fluid treatment can include expose to moisture (e.g. steam or water or bleach).

In one of the preferred embodiments of this invention, an ash wood plank is initially bleached to reduce the grain contrast between the sapwood and the hard wood features of the grain. This bleaching process generally involves the use of commercially available products, such as *Lite-N-Up* Wood Bleach available from Wood Kote Products, Portland, OR. USA) - (an aqueous, two part liquid formulation containing hydrogen peroxide and sodium hydroxide). The bleaching process involves the application of the bleach with a brush or other applicator. After the bleach is applied, it is allowed to saturate the unfinished wood, and remains in contact with the wood for an interval of anywhere one (1) to ten (10) minutes. The bleach is removed by neutralization and the bleach wood plank allowed to dry. The bleaching process repeated one or more times, until the wood plank has the desired degree of contrast between the sapwood and the hardwood features of the grain has been attained.

Where a natural wood, such as ash, intended for staining is dark, contains extraneous materials (materials not naturally present in the wood), and/or is uneven is the intensity of the grain features, it may be desirable remove surface imperfections and irregularities, and bleach the wood to lighten the natural color of woods, or to even out color differences between heart and sapwood. Bleaches can also be used to remove black water stains, iron stains, and to lighten pigments and stains. The bleaches work through a chemical reaction between the bleach and the color in the wood. These reactions differ from bleach to bleach and, the correct bleach will depend on the wood stock selected and results desired. It is emphasized that the bleaches do not actually remove the color from the wood. They react with the chemical substances to convert them to a substance that is less colored or colorless.

All of the chemicals used to bleach wood can be dangerous if used improperly so care should be taken to protect you from contact with their chemicals. Two (2) part bleaches contain usually contain hydrogen peroxide, which will burn your skin. Keep water nearby and immediately rinse off any of the bleach that touches your skin. These bleaches only work on bare wood so be sure to remove any finishes before attempting to bleach the wood. There are three (3) primary bleaches used by woodworkers today.

**Two-Part bleaches** are a combination of sodium hydroxide and hydrogen peroxide. These bleaches are used to lighten the natural color of the wood. They are sold in separate containers because they chemically neutralize each other when mixed. When the chemicals are mixed on the wood itself, the reaction removes the color from the wood. They can tend to remove the luster from wood as well, so care should be taken to test the results on a piece of scrap wood. Two part bleaches remove the natural color of the wood and bleach it to an off-white color. This type of bleach is also an excellent choice when you need to even out the color variations between heartwood and sapwood before applying a stain. These two part bleaches are preferred for the processes of this invention.

**Chlorine Bleach** can be used to remove dye stain from wood in much the same way that it removes color from clothing. Household bleaches such as Chlorox can be used but they tend to be weak and require multiple treatments. The shock treatments used for swimming pools contain a higher concentration of chlorine bleach and can be used for a more-aggressive bleaching treatment. Chlorine bleaches can also be used to remove some food stains such as grape juice.

**Oxalic Acid** is an excellent choice for removing iron stains and black water rings from old furniture. It is sold in a dry crystal form and is available at most hardware stores. You will often see oxalic acid labeled as "Wood Bleach". It can also be used to remove some inks and pigmented stains. Oxalic acid is also often found in deck cleaners because it works well with old weathered wood.

**Neutralizing Bleached after Use** - After the bleaches have completed their jobs they should be neutralized with water, and then followed up with a water/baking soda mix. Two-part bleaches can be neutralized with a 1 -part vinegar to 2-parts water bath.

Pre-treatment by physical alteration of the wood surface by wire brushing, and/or embossing with laser or mechanical dies, are more fully illustrated in the Examples in this application.

**STAINING PROCESS** - Subsequent to the pre-treatment of the wood article, as appropriate, the wood is exposed to a formulation containing a colorant suspended or dissolved in a penetrating "vehicle" or "solvent". The penetrating "vehicle" or "solvent" can be water, alcohol, petroleum distillate, or the actual finishing agent (shellac, lacquer, varnish, polyurethane, etc.). Alternatively, the materials (dyes and pigments) used in this formulation of this invention, can also be suspended in a non-penetrating vehicle (sealant), like polyurethane, which do not penetrate the pores of the wood to any significant degree; and, such color will disappear when the finish itself deteriorates or is removed intentionally.

Two types of colorants can be used in process of this invention - both pigments and dyes. The difference is in the size of the particles. Dyes are microscopic crystals that dissolve in the vehicle, and pigments are suspended in the vehicle and are much larger. Dyes will color very fine grained wood, like cherry or maple, which pigments will not. Those fine-grained woods have pores too small for pigments to attach themselves to. Pigments can contain a binder to help attach them to the wood.

The fluorescent dyes or pigments selected for use in this process are preferable soluble and/or dispersible in the fluid vehicle contemplated for use in their application to wood. The following is a representative list of the fluorescent dyes that can be used in the process of this invention:
- Acridine orange,
- Acridine yellow,
- Alexa Fluor,
- 7-Aminoactinomycin D,
- 8-Anilinonaphthalene-1-sulfonic acid,
- ATTO dyes,
- Auramine-rhodamine stain.
- Benzanthrone,
- Bimane,
- 9,10-Bis(phenylethynyl)anthracene,
- 5,12-Bis(phenylethynyl)naphthacene,
- Blacklight paint,
- Brainbow,
- Calcein,
- Carboxyfluorescein,
- Carboxyfluorescein diacetate succinimidyl ester,
- Carboxyfluorescein succinimidyl ester,
- 1-Chloro-9,10-bis(phen-ylethynyl)anthracene,
- 2-Chloro-9,10-bis(phenylethynyl)anthracene,
- 2-Chloro-9,10-diphenylanthracene
- Coumarin,
- DAPI,
- Dark quencher,
- DiOC6,
- DyLight Fluor,
- Ethidium bromide
- Fluo-3,
- Fluo-4,
- FluoProbes,
- Fluorescein,
- Fluorescein isothiocyanate,
- Fluoro-Jade stain,
- Fura-2,
- Fura-2-acetoxymethyl ester,
- GelGreen,
- GelRed,
- Green fluorescent protein,
- Heptamethine dyes,
- Hoechst stain,
- Indian yellow,
- Indo-1,
- Lucifer yellow,
- Luciferin,
- MCherry,
- Merocyanine,
- Nile blue,
- Nile red,
- Optical brightener,
- Perylene,
- Phloxine,
- Phycobilin,
- Phycoerythrin,
- Phycoervthrobilin,
- Propidium iodide,
- Pyranine,
- Rhodamine,
- Rhodamine 123,
- Rhodamine 6G,
- RiboGreen,
- RoGFP,
- Rubrene,
- (E)-Stilbene,
- (Z)-Stilbene,
- Sulforhodamine 101,
- Sulforhodamine B,
- SYBR Green I,
- Synapto-pHluorin,
- Tetraphenyl butadiene,
- Tetrasodium tris(bathophenanthroline disulfonate)ruthenium(II),
- Texas Red,
- Titan yellow,
- TSQ,
- Umbelliferone,
- Yellow fluorescent protein,

In the preferred embodiments of this invention, the stain contains one or more non-fluorescent dyes or pigments and one or more fluorescent dyes or pigments. In the representative embodiments of the process of this invention illustrated in the following Examples, the stain is formulated from colorants of at least two (2) different colors, and which preferably contains at least two fluorescent dyes or pigments, to produce a stain having the color characteristics of each dye. The stain is prepared by mixing of the fluorescent dyes or pigments in a suitable solvent/dispersing agent, such as water, alcohol or petroleum distillate. The relative proportions of dye and solvent/dispersing agent is determined empirically to accomplish the maximum amount of colorant per unit volume of stain. Obviously, the solubility of the dye relative to the solvent/dispersing agent is also a determinant in the amount of dye that can be used in the stain.

In one of the preferred embodiments of this invention, the stain of this invention can be prepared from a pre-mixed commercially available fluorescent stain, and an additional fluorescent dye or pigment added thereto. As more fully set forth in the following Examples, a commercially available fluorescent stain, such as Wild Fire brand Luminescent Paint, Magenta, is combined with another fluorescent dye. The relative proportions of this representative formulation can contain from about 1 part by weight commercially available fluorescent stain, one part water and one part fluorescent dye (1:1:1). The preferred formulation of this invention can range in relative concentration of from about two parts commercially available fluorescent stain, one part solvent/dispersing agent and two parts additional pigment (2:1:2). Obviously the solvent/dispersing agent should be the same or miscible with the solvent/dispersing agent of the commercially available fluorescent stain.

**Staining Process** - The staining and finishing can also be semi-automated and/or fully automated. It is understood that the phase "semi-automated" refers to a process wherein one or more of steps of the process of this invention is performed manually and one or more steps of the process of this invention is performed on automated preprogrammed wood finishing equipment. The various automated processes which are suitable, and utilize the stain formulations of this invention, includes: (a) automated *flatline* staining/finishing systems, (b) *hangline* automated wood staining/finishing and/or (c) the *towline* automated wood staining/finishing.

The automated flatline finish systems of this invention consist of a series of processing stations that may include sanding, dust removal, staining, application of a sealer and topcoat applications. As the name suggests, the primary part shapes processed by an automated *flatline* finish systems are flat. Liquid wood finishes are applied via automated spray guns in an enclosed environment or spray cabin. The stained material then can enter an oven, or be sanded again depending on the manufacturer's setup. The stained wood can also be recycled through the line to apply another coat of finish, or continue in a system that adds successive coats depending on the layout of the production line. These systems can typically use single or multiple passes through a processing station.

In the automated *hangline* finishing system of this invention, the wood article is suspended on a hanger, which is connected to a conveyor on the ceiling of the plant. The conveyor moves a suspended wood article through various finishing stages positioned along the conveyor system. The conveyor system includes a motorized track, and a series of carriers or hangers that are attached to a conveyor system mounted on the ceiling. The placement of the hangline on the ceiling, permits the wood article to remain suspended during staining and finishing, reducing its footprint on the floor space. The conveyor itself can be either ceiling mounted, wall mounted or supported by floor mounts. A simple overhead conveyor system can be designed to move wood products through several wood finishing processes in a continuous loop. The hangline approach to automated wood finishing also allows the option of moving items up to warmer air at the ceiling level to speed up drying process.

In the automated *towline* method, mobile carts move large furniture through various finishing stages on a conveyor system. The towline approach to automating wood finishing uses mobile carts that are propelled by conveyors mounted in or on the floor. This approach is useful for moving large, awkward shaped wood products that are difficult or impossible to lift or hang overhead, such as four-legged wood furniture. The mobile carts used in the towline approach can be designed with top platens that rotate either manually or automatically. The rotating top platens allow the operator to have easy access to all sides of the wood item throughout the various wood finishing processes such as sanding, painting and sealing.

The stain formulation of this invention can also be applied to the wood plank flooring in much that same manner as a conventional stain - using manual or automated processing techniques and/or combinations thereof. The amount of stain imparted to the wood object is process and/or equipment dependent. For example, in the manual process, the wood object is typically exposed to the stain formulation for anywhere from 2 to 10 minutes, to impart the desired degree of color contract to the sapwood and hard wood features of the wood plank. The excess stain is removed by wiping, preferably before the stain has had an opportunity to dry on the surface of the wood plank.

Depending upon the solvent/dispersing agent, the grain of the wood plank is generally raised, and light sanding may be indicated. The staining step can be repeated, as necessary, to achieve the desired effect. In the automated implementation of this process, the wood object can be repeated recycle within the staining equipment, and the amount of stain/color/contrast imparted to the wood, monitored spectroscopically.

Following staining, the surface of the wood plank is sealed, typically, with a clear polyurethane sealant, to provide a durable scratch resistant finish. Within the context this invention, the sealing finish is essentially devoid of compounds which absorb ultraviolet (UV) light.

The finished wood plank, when viewed in natural or artificial light, within the visible electromagnetic spectrum, has a traditional grain feature pattern, wherein the sapwood and hard wood features are readily differentiated. Both natural and, in many instances artificial light, contain activating electromagnetic radiation for absorption by the fluorescent dyes. Upon exposure of the stained plank to activating electromagnetic radiation, of sufficient intensity, to energize the fluorescent dyes, the grain pattern glows in the dark, to produce a distinctive sapwood and hard wood features of the stained wood plank.

Alternatively, the stained wood plank can also be exposed to a "black light" or ultraviolet light from an artificial light source, for an interval sufficient to activate the fluorescent dyes within the stained wood plank. Subsequent to such exposure, the wood plank is placed in the dark to confirm adequate saturation of the wood plank with stain. The amount of activating electromagnetic radiation exposure of a stained wood plank, to provide adequate energy, is preferably effective to cause the stained wood plank to "glow" in the dark for at least 8 and preferably 24 hours after exposure to such energy.

The Examples provided hereinafter illustrate one of the preferred embodiments of the invention. Parts and percentages appearing in these Examples are by weight unless otherwise indicated. Moreover, the automated equipment used in the following Examples is readily available, and typically used in the wood processing and coating industry.

### EXAMPLE I

An ash wood plank, suitable for use as flooring, is first obtained from a lumber yard or mill. The plank is typically a finish grade lumber and is relatively free from surface impaction and extraneous matter.

The wood plank is initially bleached with a commercially available two (2) part wood bleach, (*Lite-N-Up Wood Bleach*), by manually applying the bleach to the wood plank with a roller, and thereafter removing/neutralizing the bleach as recommended by the bleach manufacturer. The wood plank is exposed to the bleach until the wood is saturated; and, thereafter, the bleach neutralized, and the wood dried for approximately 30 minutes. The bleaching step is repeated until the contrast between the sapwood and hard wood features of the grain are reduced to the desired degree.

After the wood plank is dried, it is stained with a formulation prepared by addition of water and additional fluorescent dye to a commercially available stain, (Wild Fire Luminescent Paint, Seattle Washington, USA). This formulation is prepared by combining one (1) part Wild Fire stain, one (1) part water and one(1) part PDUG Ultra Green Glow In Dark Powder (Glow Inc. [City, State, Country]. The PDUG fluorescent powder includes titanium dioxide and a number of other metal and metals salts, (Al₂0₃, SrCO3, Eu₂0₃, and TiO₂). The foregoing formulation is mixed on a paint shaker, to insure uniform distribution of the individual components relative to one another.

The stain is manually applied to the wood plank with a brush. It can be allowed to dry or the surface of the wood plank wiped to remove the excess stain. The surface of the wood plank is then lightly sanded with 220 grit sand paper, and the staining process repeated, as needed, to attain the desired degree of color saturation of the stain into the wood plank. Once the stained wood plank is dried, it is once again sanded and sealed with a commercially available sealer, *Lenmar Ultralaq Precatalyzed Finishes lc370 Precat W*/*W Vinyl Sanding Sealer.* After the sealer dries, it is lightly sanded again and three coats of clear non-yellowing high gloss moisture curing polyurethane (McGrevor #80), for the final coats applied to the stained wood plank,

### EXAMPLE II

The process of Example I is repeated except the stain formulation contains the following proportions of commercially available stain, water and fluorescent dyer - 2:1:2

### EXAMPLE III

### (Automated Flatline Finish Systems)

The staining process of Example II is repeated with an automated, pre-programed *flatline* finish system, wherein the equipment at each processing step within the system has been calibrated, based upon the wood stock is to be stained, and the extent of contrast desired between the sapwood and the heartwood.

The wood plank is a finish grade, ash lumber and is relative free from surface imperfections and extraneous matter. The ash plank is prepare for staining by first passing it through a flatline automated machine, equipped with a series of wire brushes on rollers. The wire brush abrasion of the surface removes both minor imperfection in the surface of the plank and opens the grain of the plank prior to staining. The flatline automated, system equipment used in this step of the process can be obtained from a variety of suppliers; and, a single piece of equipment perform multiple functions, generally sequentially, such as the wire brushing, re-staining and sanding steps.

After the surface of the ash plank has been wire brushed, it is lightly sanded, by sequentially passing through the same machine. The light sanding is sufficient to create a uniform surface, and yet retain the enhanced surface absorption created by the wire brushing.

The stain formulation is the same as in Example II. The stain is applied to the ash wood plank by roller coating equipment, followed immediately thereafter by oven drying. After staining/drying of the ash wood plank, the degree of staining is compared to a pre-set standard; and, the staining/oven drying sequence repeated until the requisite degree of staining has been achieved. The stained ash plank is then passed through roller coating equipment for sealing the stained ash wood plank, followed thereafter with a protective polyurethane surface coating. The polyurethane surface coating is exposed to UV light and cures almost instantly. The sealing process is repeated until the desired polyurethane sealant has been applied.

The cured surface can be textured with a particulate (silica) to increase traction and reduce slipping; or, sanded to a mirror smooth finish.

### EXAMPLE IV

### (Automated Hangline Finish Systems)

The staining process of Example II is repeated with an automated, pre-programed *hangline* finish system, wherein a pre-assembled wood article is substituted for a wood plank. In this example, the stain formulation is applied to the pre-assembled wood article by spray application of the stain to the pre-assembled wood article, which has been suspended on a *hangline* connected to a ceiling mounted conveyor, which sequentially transports the suspended wood article along a pre-programmed path for staining and finishing the wood article. The suspended pre-assembled wood article is progressively stained and cured (dried) and, as it is transported from one processing station to another by a ceiling mounted conveyor. As in Example II, the pre-assembled wood article is generally repeatedly sprayed, and dried until the requisite degree of staining has been achieved.

### EXAMPLE V

### (Automated Towline Finish Systems)

The staining process of Example II is repeated with an automated, pre-programed *towline* finish system, wherein, wherein a pre-assembled wood article is substituted for a wood plank. In this *towline* finish system, large, awkward shaped wood products (e.g. four-legged wood furniture) are placed upon mobile carts, attached to a conveyor assembly, to sequentially transport the pre-assembled wood article along a pre-programmed path for staining and finishing the wood article.. The mobile carts used in the towline approach can be designed with top platens that rotate either manually or automatically. The rotating top platens allow the operator to have easy access to all sides of the wood item throughout the various wood finishing processes such as sanding, painting and sealing.

### EXAMPLE VI

The process of Example II is repeated, except that the pretreatment of the ash wood plank is accomplished by initially bleaching with a commercially available two (2) part wood bleach, (*Lite-N-Up Wood Bleach*), by applying the bleach to the wood plank with a roller, and thereafter removing/neutralizing the bleach as recommended by the bleach manufacturer. The wood plank is exposed to the bleach until the wood is saturated, the bleach neutralized, and the wood dried for approximately 30 minutes. The bleaching step is repeated until the contrast between the sapwood and hard wood features of the grain are reduced to the desired degree.

### EXAMPLE VII

The process of Example III is repeated, except: that, prior to staining, the ash wood plank is embossed with a laser, to impart a logo and alpha numeric features to the wood plank which are further enhanced by staining, much in the same way a natural grain pattern is enhanced.

## Claims

1. A method for staining/finishing wood carried out within an automated or a semi-automated flatline wood staining/finishing system, for the enhanced visualization of a natural grain pattern in wood products, with a stain formulation containing more than one between fluorescent dyes and pigments in a fluid vehicle, the method comprises:
A. Preparing a natural unfinished wood stock for staining, said natural unfinished wood stock having a grain pattern **characterized by** a natural distribution of sapwood and heartwood, by sanding said unfinished natural wood stock, as needed, to remove surface imperfections;
B. Reducing the intensity of said grain pattern of said unfinished wood stock, lightening natural color of said sapwood and heartwood of said unfinished wood stock or evening out color differences between heartwood and sapwood of said natural unfinished wood stock by bleaching said natural unfinished wood stock with an aqueous bleach solution selected from the group consisting of (i) a two part liquid formulation containing hydrogen peroxide and sodium hydroxide, (ii) a chlorine bleach and (iii) oxalic acid;
C. Neutralizing said aqueous bleach solution in said natural unfinished wood stock by first contacting said natural unfinished wood stock with water, and then with an aqueous solution containing baking soda mix;
D. Repeating Step B and/or C as desired at least one additional time; and
E. Staining said natural unfinished wood stock with a stain formulation containing more than one between fluorescent dyes and pigments in a fluid vehicle, at least one of said dyes or pigments being fluorescent when exposed to activating electromagnetic radiation in the UV and near UV band of the electromagnetic spectrum, and each of said dyes or pigment having different color than the other, so as to enhance visualization of said grain pattern in said natural wood products in the absence of activating electromagnetic radiation,
wherein at least one of the foregoing steps is pre-programmed and performed within said flatline system, by automated equipment within said flatline system.

2. A method for staining/finishing wood carried out within an automated or a semi-automated hangline wood staining/finishing system, for the enhanced visualization of a natural grain pattern in wood products, with a stain formulation containing more than one between fluorescent dyes and pigments in a fluid vehicle, the method comprises:
A. Preparing a natural unfinished wood stock for staining, said natural unfinished wood stock having a grain pattern **characterized by** a natural distribution of sapwood and heartwood, by sanding said unfinished natural wood stock, as needed, to remove surface imperfections;
B. Reducing the intensity of said grain pattern of said unfinished wood stock, lightening natural color of said sapwood and heartwood of said unfinished wood stock or evening out color differences between heartwood and sapwood of said natural unfinished wood stock by bleaching said natural unfinished wood stock with an aqueous bleach solution selected from the group consisting of (i) a two part liquid formulation containing hydrogen peroxide and sodium hydroxide, (ii) a chlorine bleach and (iii) oxalic acid;
C. Neutralizing said aqueous bleach solution in said natural unfinished wood stock by first contacting said natural unfinished wood stock with water, and then with an aqueous solution containing baking soda mix;
D. Repeating Step B and/or C as desired at least one additional time; and
E. Staining said natural unfinished wood stock with a stain formulation containing more than one between fluorescent dyes and pigments in a fluid vehicle, at least one of said dyes or pigments being fluorescent when exposed to activating electromagnetic radiation in the UV and near UV band of the electromagnetic spectrum, and each of said dyes or pigment having different color than the other, so as to enhance visualization of said grain pattern in said natural wood products in the absence of activating electromagnetic radiation,
wherein at least one of the foregoing steps is pre-programmed and performed within said hangline system, by automated equipment within said hangline system.

3. A method for staining/finishing wood carried out within an automated or a semi-automated towline wood staining/finishing system, for the enhanced visualization of a natural grain pattern in wood products, with a stain formulation containing more than one between fluorescent dyes and pigments in a fluid vehicle, the method comprises:
A. Preparing a natural unfinished wood stock for staining, said natural unfinished wood stock having a grain pattern **characterized by** a natural distribution of sapwood and heartwood, by sanding said unfinished natural wood stock, as needed, to remove surface imperfections;
B. Reducing the intensity of said grain pattern of said unfinished wood stock, lightening natural color of said sapwood and heartwood of said unfinished wood stock or evening out color differences between heartwood and sapwood of said natural unfinished wood stock by bleaching said natural unfinished wood stock with an aqueous bleach solution selected from the group consisting of (i) a two part liquid formulation containing hydrogen peroxide and sodium hydroxide, (ii) a chlorine bleach and (iii) oxalic acid;
C. Neutralizing said aqueous bleach solution in said natural unfinished wood stock by first contacting said natural unfinished wood stock with water, and then with an aqueous solution containing baking soda mix;
D. Repeating Step B and/or C as desired at least one additional time; and
E. Staining said natural unfinished wood stock with a stain formulation containing more than one between fluorescent dyes and pigments in a fluid vehicle, at least one of said dyes or pigments being fluorescent when exposed to activating electromagnetic radiation in the UV and near UV band of the electromagnetic spectrum, and each of said dyes or pigment having different color than the other, so as to enhance visualization of said grain pattern in said natural wood products in the absence of activating electromagnetic radiation,
wherein at least one of the foregoing steps is pre-programmed and performed within said towline system, by automated equipment within said towline system.

4. The method of any one of Claims 1 to 3, wherein said stain formulation contains of from about two parts by weight commercially available fluorescent stain, about one part by weight solvent/dispersing agent and about two parts by weight additional pigment.

5. The method of any one of Claims 1 to 3, wherein Step E is repeated at least one additional time, until attaining said grain pattern contrast in sapwood and heartwood.

6. The method of any one of Claims 1 to 3, comprising the additional step of F. Applying a transparent, protective surface coating to said surface of said natural wood products following staining of said natural wood products, said transparent, protective surface coating being abrasion resistant and essentially devoid of compounds which absorb activating electromagnetic radiation.

7. The method of any one of Claims 1 to 3, wherein said transparent, protective surface coating is essentially devoid of compounds which absorb ultraviolet (UV) light.

8. The method of any one of Claims 1 to 3, additionally comprising sealing the stained wood stock surface with an abrasion resistant clear coating which is transmissive of ultraviolet light.

9. The method of any one of Claims 1 to 3, wherein said natural wood products are sanded between successive exposures to the stain.

10. The method of any one of Claims 1 to 3, wherein said natural wood products are sanded during successive exposure to the stain.

11. The method of any one of Claims 1 to 3, wherein, said natural wood product is embossed prior to staining.

## Patentansprüche

1. Ein Verfahren zum Beizen/Bearbeitung von Holz, das innerhalb eines automatisierten oder halbautomatisierten Systems mit der flachen Linie zum Beizen/Bearbeitung von Holz zur erhöhten Visualisierung einer natürlichen Maserung in Holzprodukten mit einer mehr als eins von den fluoreszenten Farbstoffen und Pigmenten enthaltenden Beizkomposition in einer Trägerflüssigkeit durchgeführt wird, wobei das Verfahren umfasst:
A. Vorbereitung eines natürlichen unbearbeiteten Holzmaterials auf das Beizen, wobei das genannte natürliche unbearbeitete Holzmaterial eine Maserung hat, das durch eine natürliche Verteilung des Splintholzes und des Kernholzes gekennzeichnet wird, durch Schleifen des genannten unbearbeiteten natürlichen Holzmaterials, nach Bedarf, um Oberflächenfehler zu entfernen;
B. Reduzierung der Intensität der genannten Maserung des genannten unbearbeiteten Holzmaterials, Abklärung von Naturfarbe des genannten Splintholzes und Kernholzes des genannten unbearbeiteten Holzmaterials oder Ausgleichen von Farbunterschiede zwischen Kernholz und Splintholz des genannten natürlichen unbearbeiteten Holzmaterials durch Bleichung des genannten natürlichen unbearbeiteten Holzmaterials mit einer wässerigen Bleichlösung, die aus der Gruppe gewählt ist, die aus (i) einer Hydroperoxid und Natriumhydroxid enthaltenden flüssigen Zweikomponenten-Komposition, (ii) Chlorbleiche und (iii) Oxalsäure besteht;
C. Neutralisieren der genannten wässerigen Bleichlösung in dem genannten natürlichen unbearbeiteten Holzmaterial erst durch die Kontaktierung des genannten natürlichen unbearbeiteten Holzmaterials mit Wasser und danach mit einer wässerigen Lösung, die eine Beimischung von Natriumhydrogencarbonat enthält;
D. Wiederholung des Schrittes B und/oder C nach dem Wunsch zumindest ein weiteres Mal und
E. Beizen des genannten natürlichen unbearbeiteten Holzmaterials mit einer Beizkomposition, die mehr als eins von den fluoreszenten Farbstoffen und Pigmenten in einer Trägerflüssigkeit enthält, wobei zumindest eines von den genannten Farbstoffen oder Pigmenten fluoreszent ist, wenn es aktivierender elektromagnetischer Strahlung in dem UV- und bei dem UV-Bereich des elektromagnetischen Spektrums ausgesetzt werden, und jedes von den genannten Farbstoffen oder Pigment eine unterschiedliche Farbe als die anderen hat, um die Visualisierung der genannten Maserung in den genannten natürlichen Holzprodukten in Abwesenheit der aktivierenden elektromagnetischen Strahlung zu erhöhen,
wobei zumindest einer der vorhergehenden Schritte vorprogrammiert ist und innerhalb des genannten Systems mit der flachen Linie durch eine automatisierte Ausrüstung innerhalb des genannten Systems mit der flachen Linie durchgeführt wird.

2. Ein Verfahren zum Beizen/Bearbeitung von Holz, das innerhalb eines automatisierten oder halbautomatisierten Systems mit der aufgehängten Linie zum Beizen/Bearbeitung von Holz zur erhöhten Visualisierung einer natürlichen Maserung in Holzprodukten mit einer mehr als eins von den fluoreszenten Farbstoffen und Pigmenten enthaltenden Beizkomposition in einer Trägerflüssigkeit durchgeführt wird, wobei das Verfahren umfasst:
A. Vorbereitung eines natürlichen unbearbeiteten Holzmaterials auf das Beizen, wobei das genannte natürliche unbearbeitete Holzmaterial eine Maserung hat, das durch eine natürliche Verteilung des Splintholzes und des Kernholzes gekennzeichnet wird, durch Schleifen des genannten unbearbeiteten natürlichen Holzmaterials, nach Bedarf, um Oberflächenfehler zu entfernen;
B. Reduzierung der Intensität der genannten Maserung des genannten unbearbeiteten Holzmaterials, Abklärung von Naturfarbe des genannten Splintholzes und Kernholzes des genannten unbearbeiteten Holzmaterials oder Ausgleichen von Farbunterschiede zwischen Kernholz und Splintholz des genannten natürlichen unbearbeiteten Holzmaterials durch Bleichung des genannten natürlichen unbearbeiteten Holzmaterials mit einer wässerigen Bleichlösung, die aus der Gruppe gewählt ist, die aus (i) einer Hydroperoxid und Natriumhydroxid enthaltenden flüssigen Zweikomponenten-Komposition, (ii) Chlorbleiche und (iii) Oxalsäure besteht;
C. Neutralisieren der genannten wässerigen Bleichlösung in dem genannten natürlichen unbearbeiteten Holzmaterial erst durch die Kontaktierung des genannten natürlichen unbearbeiteten Holzmaterials mit Wasser und danach mit einer wässerigen Lösung, die eine Beimischung von Natriumhydrogencarbonat enthält;
D. Wiederholung des Schrittes B und/oder C nach dem Wunsch zumindest ein weiteres Mal und
E. Beizen des genannten natürlichen unbearbeiteten Holzmaterials mit einer Beizkomposition, die mehr als eins von den fluoreszenten Farbstoffen und Pigmenten in einer Trägerflüssigkeit enthält, wobei zumindest eines von den genannten Farbstoffen oder Pigmenten fluoreszent ist, wenn es aktivierender elektromagnetischer Strahlung in dem UV- und bei dem UV-Bereich des elektromagnetischen Spektrums ausgesetzt werden, und jedes von den genannten Farbstoffen oder Pigment eine unterschiedliche Farbe als die anderen hat, um die Visualisierung der genannten Maserung in den genannten natürlichen Holzprodukten in Abwesenheit der aktivierenden elektromagnetischen Strahlung zu erhöhen,
wobei zumindest einer der vorhergehenden Schritte vorprogrammiert ist und innerhalb des genannten Systems mit der aufgehängten Linie durch eine automatisierte Ausrüstung innerhalb des genannten Systems mit der aufgehängten Linie durchgeführt wird.

3. Ein Verfahren zum Beizen/Bearbeitung von Holz, das innerhalb eines automatisierten oder halbautomatisierten Systems mit der Schleppleine zum Beizen/Bearbeitung von Holz zur erhöhten Visualisierung einer natürlichen Maserung in Holzprodukten mit einer mehr als eins von den fluoreszenten Farbstoffen und Pigmenten enthaltenden Beizkomposition in einer Trägerflüssigkeit durchgeführt wird, wobei das Verfahren umfasst:
A. Vorbereitung eines natürlichen unbearbeiteten Holzmaterials auf das Beizen, wobei das genannte natürliche unbearbeitete Holzmaterial eine Maserung hat, das durch eine natürliche Verteilung des Splintholzes und des Kernholzes gekennzeichnet wird, durch Schleifen des genannten unbearbeiteten natürlichen Holzmaterials, nach Bedarf, um Oberflächenfehler zu entfernen;
B. Reduzierung der Intensität der genannten Maserung des genannten unbearbeiteten Holzmaterials, Abklärung von Naturfarbe des genannten Splintholzes und Kernholzes des genannten unbearbeiteten Holzmaterials oder Ausgleichen von Farbunterschiede zwischen Kernholz und Splintholz des genannten natürlichen unbearbeiteten Holzmaterials durch Bleichung des genannten natürlichen unbearbeiteten Holzmaterials mit einer wässerigen Bleichlösung, die aus der Gruppe gewählt ist, die aus (i) einer Hydroperoxid und Natriumhydroxid enthaltenden flüssigen Zweikomponenten-Komposition, (ii) Chlorbleiche und (iii) Oxalsäure besteht;
C. Neutralisieren der genannten wässerigen Bleichlösung in dem genannten natürlichen unbearbeiteten Holzmaterial erst durch die Kontaktierung des genannten natürlichen unbearbeiteten Holzmaterials mit Wasser und danach mit einer wässerigen Lösung, die eine Beimischung von Natriumhydrogencarbonat enthält;
D. Wiederholung des Schrittes B und/oder C nach dem Wunsch zumindest ein weiteres Mal und
E. Beizen des genannten natürlichen unbearbeiteten Holzmaterials mit einer Beizkomposition, die mehr als eins von den fluoreszenten Farbstoffen und Pigmenten in einer Trägerflüssigkeit enthält, wobei zumindest eines von den genannten Farbstoffen oder Pigmenten fluoreszent ist, wenn es aktivierender elektromagnetischer Strahlung in dem UV- und bei dem UV-Bereich des elektromagnetischen Spektrums ausgesetzt werden, und jedes von den genannten Farbstoffen oder Pigment eine unterschiedliche Farbe als die anderen hat, um die Visualisierung der genannten Maserung in den genannten natürlichen Holzprodukten in Abwesenheit der aktivierenden elektromagnetischen Strahlung zu erhöhen,
wobei zumindest einer der vorhergehenden Schritte vorprogrammiert ist und innerhalb des genannten Systems mit der Schleppleine durch eine automatisierte Ausrüstung innerhalb des genannten Systems mit der Schleppleine durchgeführt wird.

4. Das Verfahren nach einem der Ansprüche 1-3, wobei die genannte Beizkomposition ca. zwei Teile von einer kommerziell verfügbaren fluoreszenten Beize nach Gewicht, ca. ein Teil von einem Lösungsmittel/Dispergiermittel nach Gewicht und ca. zwei Teile von einem zusätzlichen Pigment nach Gewicht enthält.

5. Das Verfahren nach einem der Ansprüche 1-3, wobei der Schritt E zumindest ein weiteres Mal wiederholt wird, sobald Kontrast der genannten Maserung in Splintholz und Kernholz erreicht wird.

6. Das Verfahren nach einem der Ansprüche 1-3, wobei das den zusätzlichen Schritt umfasst:
F. Aufbringen der transparenten Schutzoberflächenbeschichtung auf die genannte Oberfläche der genannten natürlichen Holzprodukte nach Beizen der genannten natürlichen Holzprodukte, wobei die genannte transparente Schutzoberflächenbeschichtung abriebfest ist und im Grunde keine Verbindungen hat, die aktivierende elektromagnetische Strahlung absorbieren.

7. Das Verfahren nach einem der Ansprüche 1-3, wobei die genannte transparente Schutzoberflächenbeschichtung im Grunde keine Verbindungen hat, die ultraviolettes Licht (UV) absorbieren.

8. Das Verfahren nach einem der Ansprüche 1-3, wobei das zusätzlich Versiegeln der gebeizten Oberfläche von Holzmaterial mit einer abriebfesten Transparentbeschichtung umfasst, die ultraviolettes Licht überträgt.

9. Das Verfahren nach einem der Ansprüche 1-3, wobei die genannten natürlichen Holzprodukte zwischen nachfolgenden Beizeinwirkungen geschliffen werden.

10. Das Verfahren nach einem der Ansprüche 1-3, wobei die genannten natürlichen Holzprodukte während nachfolgender Beizeinwirkung geschliffen werden.

11. Das Verfahren nach einem der Ansprüche 1-3, wobei das genannte natürliche Holzprodukt vor Beizen geprägt wird.

## Revendications

1. Un procédé de coloration / finition du bois réalisé dans un système automatisé ou semi-automatisé de coloration / finition du bois à ligne plate, pour la visualisation améliorée d'un pattern de grain naturel dans des produits en bois, avec une formulation de teinture contenant plus d'un des colorants fluorescents et des pigments dans un véhiculeur fluide, le procédé comprenant:
A. Préparation d'un bois brut naturel non fini pour la coloration, ledit bois brut naturel non fini ayant un pattern de grain **caractérisé par** une distribution naturelle d'aubier et de duramen, en ponçant ledit bois brut naturel non fini, si nécessaire, pour éliminer les imperfections de surface;
B. Réduction de l'intensité dudit pattern de grain dudit bois brut non fini, éclaircissage de la couleur naturelle dudit aubier et duramen dudit bois brut non fini ou uniformisation les différences de couleur entre le duramen et l'aubier dudit bois brut naturel non fini en blanchissant ledit bois brut naturel non fini avec une solution aqueuse de blanchiment choisie du groupe consistant en (i) une formulation liquide en deux parties contenant du peroxyde d'hydrogène et de l'hydroxyde de sodium, (ii) un agent de blanchiment au chlore et (iii) de l'acide oxalique;
C. Neutralisation de ladite solution aqueuse de blanchiment dans ledit bois brut naturel non fini en mettant d'abord en contact ledit bois brut naturel non fini avec de l'eau, puis avec une solution aqueuse contenant un mélange de bicarbonate de soude;
D. Répétition des étapes B et /ou C au moins une fois supplémentaire, le cas échéant; et
E. Coloration dudit bois brut naturel non fini avec une formulation de teinture contenant plus d'un des colorants fluorescents et des pigments dans un véhiculeur fluide, au moins l'un desdits colorants ou pigments étant fluorescents, lorsqu'ils sont exposés à rayonnement électromagnétique d'activation dans la bande UV et UV proches du spectre électromagnétique, et chacun desdits colorants ou pigments ayant une couleur différente de l'autre, de manière à améliorer la visualisation dudit pattern de grain dans lesdits produits en bois naturel en l'absence de rayonnement électromagnétique d'activation,
où au moins l'une des étapes précédentes est préprogrammée et exécutée dans ledit système à ligne plate, par un équipement automatisé dans ledit système à ligne plate.

2. Un procédé de coloration / finition du bois réalisé dans un système automatisé ou semi-automatisé de coloration / finition du bois à ligne suspendue, pour la visualisation améliorée d'un pattern de grain naturel dans des produits en bois, avec une formulation de teinture contenant plus d'un des colorants fluorescents et des pigments dans un véhiculeur fluide, le procédé comprenant:
A. Préparation d'un bois brut naturel non fini pour la coloration, ledit bois brut naturel non fini ayant un pattern de grain **caractérisé par** une distribution naturelle d'aubier et de duramen, en ponçant ledit bois brut naturel non fini, si nécessaire, pour éliminer les imperfections de surface;
B. Réduction de l'intensité dudit pattern de grain dudit bois brut non fini, éclaircissage de la couleur naturelle dudit aubier et duramen dudit bois brut non fini ou uniformisation les différences de couleur entre le duramen et l'aubier dudit bois brut naturel non fini en blanchissant ledit bois brut naturel non fini avec une solution aqueuse de blanchiment choisie du groupe consistant en (i) une formulation liquide en deux parties contenant du peroxyde d'hydrogène et de l'hydroxyde de sodium, (ii) un agent de blanchiment au chlore et (iii) de l'acide oxalique;
C. Neutralisation de ladite solution aqueuse de blanchiment dans ledit bois brut naturel non fini en mettant d'abord en contact ledit bois brut naturel non fini avec de l'eau, puis avec une solution aqueuse contenant un mélange de bicarbonate de soude;
D. Répétition des étapes B et /ou C au moins une fois supplémentaire, le cas échéant; et
E. Coloration dudit bois brut naturel non fini avec une formulation de teinture contenant plus d'un des colorants fluorescents et des pigments dans un véhiculeur fluide, au moins l'un desdits colorants ou pigments étant fluorescents, lorsqu'ils sont exposés à rayonnement électromagnétique d'activation dans la bande UV et UV proches du spectre électromagnétique, et chacun desdits colorants ou pigments ayant une couleur différente de l'autre, de manière à améliorer la visualisation dudit pattern de grain dans lesdits produits en bois naturel en l'absence de rayonnement électromagnétique d'activation,
où au moins l'une des étapes précédentes est préprogrammée et exécutée dans ledit système à ligne suspendue, par un équipement automatisé dans ledit système à ligne suspendue.

3. Un procédé de coloration / finition du bois réalisé dans un système automatisé ou semi-automatisé de coloration / finition du bois à ligne de câble, pour la visualisation améliorée d'un pattern de grain naturel dans des produits en bois, avec une formulation de teinture contenant plus d'un des colorants fluorescents et des pigments dans un véhiculeur fluide, le procédé comprenant:
A. Préparation d'un bois brut naturel non fini pour la coloration, ledit bois brut naturel non fini ayant un pattern de grain **caractérisé par** une distribution naturelle d'aubier et de duramen, en ponçant ledit bois brut naturel non fini, si nécessaire, pour éliminer les imperfections de surface;
B. Réduction de l'intensité dudit pattern de grain dudit bois brut non fini, éclaircissage de la couleur naturelle dudit aubier et duramen dudit bois brut non fini ou uniformisation les différences de couleur entre le duramen et l'aubier dudit bois brut naturel non fini en blanchissant ledit bois brut naturel non fini avec une solution aqueuse de blanchiment choisie du groupe consistant en (i) une formulation liquide en deux parties contenant du peroxyde d'hydrogène et de l'hydroxyde de sodium, (ii) un agent de blanchiment au chlore et (iii) de l'acide oxalique;
C. Neutralisation de ladite solution aqueuse de blanchiment dans ledit bois brut naturel non fini en mettant d'abord en contact ledit bois brut naturel non fini avec de l'eau, puis avec une solution aqueuse contenant un mélange de bicarbonate de soude;
D. Répétition des étapes B et /ou C au moins une fois supplémentaire, le cas échéant; et
E. Coloration dudit bois brut naturel non fini avec une formulation de teinture contenant plus d'un des colorants fluorescents et des pigments dans un véhiculeur fluide, au moins l'un desdits colorants ou pigments étant fluorescents, lorsqu'ils sont exposés à rayonnement électromagnétique d'activation dans la bande UV et UV proches du spectre électromagnétique, et chacun desdits colorants ou pigments ayant une couleur différente de l'autre, de manière à améliorer la visualisation dudit pattern de grain dans lesdits produits en bois naturel en l'absence de rayonnement électromagnétique d'activation,
où au moins l'une des étapes précédentes est préprogrammée et exécutée dans ledit système à ligne de câble, par un équipement automatisé dans ledit système à ligne de câble.

4. Le procédé selon l'une quelconque des revendications 1 à 3, dans lequel ladite formulation de teinture contient environ deux parties en poids de teinture fluorescente disponible dans le commerce, environ une partie en poids de solvant / agent dispersant et environ deux parties en poids de pigment supplémentaire.

5. Le procédé selon l'une quelconque des revendications 1 à 3, dans lequel l'étape E est répétée au moins une fois supplémentaire, jusqu'à atteindre ledit contraste de pattern de grain dans l'aubier et le duramen.

6. Le procédé selon l'une quelconque des revendications 1 à 3, comprenant l'étape supplémentaire d'
F. Application d'une couche de surface protecteurrice transparente sur ladite surface desdits produits en bois naturel après coloration desdits produits en bois naturel, ladite couche de surface protecteurrice transparente étant résistante à l'abrasion et essentiellement dépourvue de composés qui absorbent le rayonnement électromagnétique d'activation.

7. Le procédé selon l'une quelconque des revendications 1 à 3, dans lequel ladite couche de surface protecteurrice transparente est essentiellement dépourvu de composés qui absorbent la lumière ultraviolette (UV).

8. Le procédé selon l'une quelconque des revendications 1 à 3, comprenant en outre étanchéification de la surface du bois brut coloré avec une couche transparente résistante à l'abrasion qui transmet la lumière ultraviolette.

9. Le procédé selon l'une quelconque des revendications 1 à 3, dans lequel desdits produits en bois naturel sont poncés entre les expositions successives à la teinture.

10. Le procédé selon l'une quelconque des revendications 1 à 3, dans lequel desdits produits en bois naturel sont poncés pendant une exposition successive à la teinture.

11. Le procédé selon l'une quelconque des revendications 1 à 3, dans lequel ledit produit en bois naturel est gaufré avant la coloration.
